# EUROPÄISCHE PATENTANMELDUNG

(11) **EP 1 886 732 A1**
(43) Veröffentlichungstag der Anmeldung: **13.02.2008**
(21) Anmeldenummer: 07014970.3
(22) Anmeldetag: 31.07.2007
(51) Int. Cl.: B05B 1/30

(54) **Ventilanordnung mit verringerter Betätigungskraft**

(30) Priorität: 11.08.2006 DE 202006012417 U
(71) Anmelder: Suttner GmbH, 33818 Leopoldshöhe (DE)
(72) Erfinder: Zunkel, Steffen, 33813Oerlinghausen (DE)
(74) Vertreter: Gesthuysen, von Rohr & Eggert

(57) **Zusammenfassung**

Die Erfindung betrifft eine Ventilanordnung (1) zum Absperren und Freigeben von vorzugsweise unter hohem Druck stehender Flüssigkeit, insbesondere für eine Hochdruckleitung, Ventilpistole oder Hochdruckreinigungsvorrichtung, mit einem Absperrventil (6), das einen Ventilkörper (15) und einen zugeordneten Ventilsitz (15) aufweist, insbesondere wobei der Ventilkörper (15) vom Flüssigkeitsdruck in Schließstellung gegen den Ventilsitz (15) vorspannbar ist, und mit einer Öffnungseinrichtung (7) zum Öffnen des Absperrventils (6) durch Abheben des Ventilkörpers (14) vom Ventilsitz (15), wobei die Öffnungseinrichtung (7) einen über einen Steuerkanal (25) mit der Flüssigkeit beaufschlagbaren Kolben (21) aufweist, der in Öffnungsrichtung des Absperrventils (6) wirkt, wobei der Steuerkanal (25) stromauf des Absperrventils (6) zur einlaßseitigen Abzweigung der Flüssigkeit angeschlossen ist, um den Kolben (21) in Öffnungsrichtung des Ventilkörpers (14) vorzuspannen und/oder die Kraft zum Öffnen des Absperrventils (6) zu verringern, und wobei die Ventilanordnung (1) ein Mittel zur verlangsamung bzw. Dämpfung des Schließens des Absperrventils (6) aufweist.

## Beschreibung

Die vorliegende Erfindung betrifft eine Ventilanordnung insbesondere für eine Hochdruckreinigungsvorrichtung gemäß dem Oberbegriff des Anspruchs 1 sowie eine damit versehene Ventilpistole und Hochdruckreinigungsvorrichtung.

Hochdruckreinigungsvorrichtungen, auch kurz Hochdruckreiniger genannt, werden für Reinigungszwecke eingesetzt, An die Hochdruckreinigungsvorrichtung ist eine Hochdruckleitung, üblicherweise ein Hochdruckschlauch, und eine Ventilpistole mit einer optionalen Lanze und einer Düse zur Ausgabe einer Flüssigkeit, meist Wasser oder sonstige Reinigungsflüssigkeit, unter hohem Druck und ggf. unter hoher Temperatur anschließbar. Zum Absperren der unter hohem Druck stehenden Flüssigkeit ist eine Ventilanordnung meistens in der Ventilpistole vorgesehen. Die Ventilanordnung weist ein Absperrventil auf, das manuell bei Betätigung der Ventilpistole geöffnet werden kann. Bei hohen Drücken erfordert das Öffnen des Absperrventils gegen den Flüssigkeitsdruck eine verhältnismäßig große Kraft.

Zur Verringerung der Öffnungskraft ist es bereits bekannt, eine verhältnismäßig große Untersetzung zwischen einem Handhebel und einem Stellelement zum Öffnen des Absperrventils vorzusehen. Bedarfsweise kann die Untersetzung auch ein variables Untersetzungsverhältnis aufweisen. Nachteilig ist hierbei, daß dementsprechend der Öffnungsweg vergrößert wird.

Aus der EP 1 621 254 A2 ist eine Ventilpistole mit einer Ventilanordnung bekannt. Die Ventilanordnung umfaßt ein Absperrventil mit einem Ventilkörper, der mittels einer Öffnungseinrichtung gegen den Flüssigkeitsdruck öffenbar ist. Die Öffnungseinrichtung weist einen Kolben auf, der über einen Steuerkanal mit der Flüssigkeit beaufschlagbar ist und in Öffnungsrichtung des Absperrventils wirkt, Der Steuerkanal zweigt stromab des Absperrventils ab, steht also mit dem Auslaßdruck in Verbindung. Dementsprechend führt der auf den Kolben wirkende Flüssigkeitsdruck dazu, daß geringere Kräfte zum Offenhalten des Absperrventils erforderlich sind.

Der vorliegenden Erfindung liegt die Aufgabe zugrunde, eine Ventilanordnung zum Absperren und Freigeben von unter hohem Druck stehender Flüssigkeit sowie eine Ventilpistole mit einer derartigen Ventilanordnung und eine Hochdruckreinigungsvorrichtung mit einer derartigen Ventilanordnung anzugeben, wobei das Öffnen des Absperrventils auch bei hohem Flüssigkeitsdruck hydraulisch verringert wird.

Die obige Aufgabe wird durch eine Ventilanordnung gemäß Anspruch 1, eine Ventilpistole gemäß Anspruch 9 oder eine Hochdrucksreinigungsvorrichtung gemäß Anspruch 10 gelöst. Vorteilhafte Weiterbildungen sind Gegenstand der Unteransprüche.

Eine grundliegende Idee der vorliegenden Erfindung liegt darin, einen in Öffnungsrichtung des Absperrventils wirkenden Kolben der Öffnungseinrichtung mit dem einlaßseitigen Flüssigkeitsdruck - also dem Druck stromauf des Absperrventils - zu beaufschlagen, um dadurch die erforderliche Öffnungskraft hydraulisch zu verringern, also insbesondere ohne Vergrößerung des zum Öffnen erforderlichen Betätigungsweges eines Handhebels oder dergleichen.

Ein weiterer Aspekt der vorliegenden Erfindung liegt darin, daß die Ventilanordnung ein Mittel zur Verlangsamung bzw. Dämpfung des Schließens des Absperrventils aufweist, Dies wird insbesondere durch entsprechende Drosselung des Abflusses von Flüssigkeit vor dem Kolben erreicht, so kann auf einfache Weise ein übermäßiges Aufprallen des Ventilkörpers auf den zugeordneten Ventilsitz auch bei hohen Schließkräften der Schließfeder vermieden oder zumindest verringert bzw. gedämpft werden.

Weitere Merkmale, Vorteile und Aspekte der vorliegenden Erfindung ergeben sich aus den Ansprüchen und der nachfolgenden Beschreibung einer bevorzugten Ausführungsform anhand der Zeichnung. Es zeigt:
- Fig. 1: eine schematische Ansicht einer Hochdruckreinigungsvorrichtung mit einer daran angeschlossenen Ventilpistole mit der Ventilanordnung gemäß der vorliegenden Erfindung; und
- Fig. 2: einen schematischen Schnitt der Ventilanordnung.

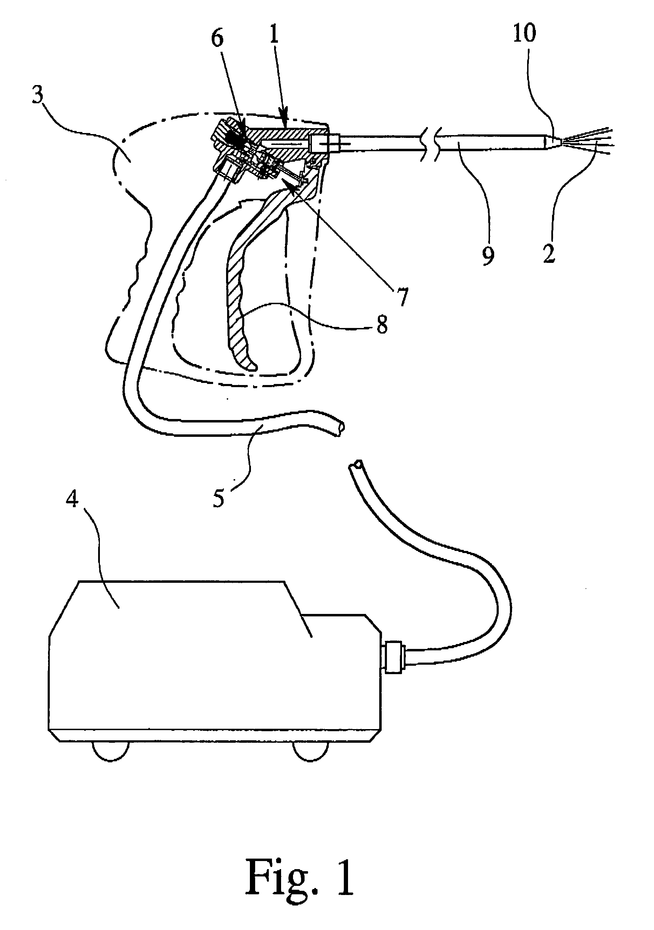

Figur 1 zeigt in einer sehr schematischen, blockschaltbildartigen Darstellung eine vorschlagsgemäße Ventilanordnung 1 zum Absperren und Freigeben von unter hohem Druck stehender Flüssigkeit 2. Beim Darstellungsbeispiel ist die Ventilanordnung 1 in eine Ventilpistole 3 eingebaut, die an eine Hochdruckreinigungsvorrichtung 4 im eingangs genannten Sinne angeschlossen ist. Vorzugsweise ist die Ventilpistole 3 über einen Schlauch 5 an die Hochdrucksreinigungsvomchtung 4 angeschlossen. Der Schlauch 5 bildet dann eine Hochdruckleitung, der die Ventilanordnung 1 zum wahlweisen Absperren und Freigeben zugeordnet ist,

Die Flüssigkeit 2, beispielsweise Wasser oder eine sonstige Reinigungsflüssigkeit, steht insbesondere unter hohem Druck. Unter hohem Druck ist bei der vorliegenden Erfindung vorzugsweise ein Druck von mindestens 10 MPa, insbesondere mindestens 20 MPa und mehr, gegebenenfalls sogar 50 MPa und mehr, zu verstehen,

Die Ventilanordnung 1 weißt ein Absperrventil 6 auf, daß mittels einer Öffnungseinrichtung 7, die ihrerseits vorzugsweise einen Handhebel 8 aufweist, geöffnet werden kann.

Auslaßseitig ist an die Ventilanordnung 1 bzw. Ventilpistole 3 vorzugsweise eine optionale Sprühlanze 9 und eine Düse 10 zur Ausgabe der Flüssigkeit 2, wie in Figur 1 angedeutet, angeschlossen.

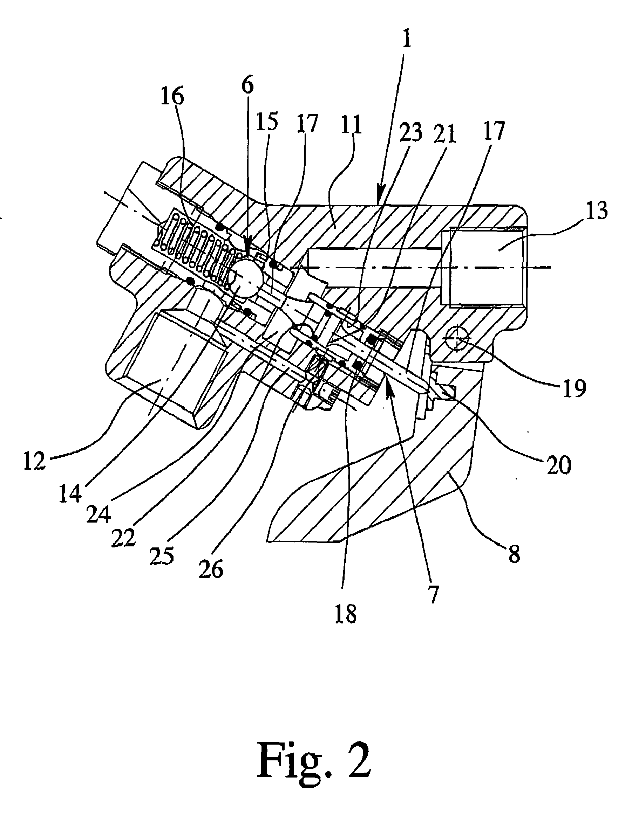

Figur 2 zeigt in einem Schnitt einen bevorzugten Aufbau der vorschlagsgemäßen Ventilanordnung 1.

Die Ventilanordnung 1 weist ein vorzugsweise aus Messing oder dergleichen bestehendes Gehäuse 11 auf, in dem das Absperrventil 6 aufgenommen ist. Das Gehäuse 11 weist einen Einlaß bzw. Einlaßanschluß 12 zur Zuführung der Flüssigkeit 2 und einen Auslaß bzw. Auslaßanschluß 13 zur Ableitung der Flüssigkeit 2 auf. Das Absperrventil 6 verbindet den Einlaß 12 flüdisch mit dem Auslaß 13, so daß die Verbindung sperrbar ist,

Das Absperrventil 6 weist einen vorzugsweise als Kugel ausgebildeten Ventilkörper 14 auf, dem ein in das Gehäuse 11 eingebauter Ventilsitz 15 zugeordnet ist. Der Ventilkörper 14 ist bezüglich der Durchströmrichtung der Flüssigkeit 2 vor dem Ventilsitz 15 angeordnet.

Das Absperrventil 6 weist ferner eine Feder 16 auf, die den Ventilkörper 14 in seine Schließstellung gegen den Ventilsitz 15 vorspannt. Bedarfsweise ist die Vorspannkraft einstellbar.

Der Ventilkörper 14 kann bedarfsweise auch geführt und/oder durch Anschläge in seinen Bewegungsraum begrenzt sein.

Die Öffnungseinrichtung 7 weist ein Stellelement 17 auf, das vorzugsweise als Bestätigungsstange ausgebildet und vorzugsweise aus dem Gehäuse 11 abgedichtet (Dichtung 18) herausgeführt ist.

Bei Betätigung des Handhebels 8 ist das Absperrventil 6 über die Öffnungseinrichtung 7 bzw. dessen Stellelement 17 offenbar. Insbesondere ist das Stellelement 17 hierzu derartig verschiebbar, daß es den Ventilkörper 14 vom zugeordneten Ventilsitz 15 abhebt und dadurch das Absperrventil 6 öffnet, also die flüdische Verbindung für die Flüssigkeit vom Einlaß 12 zum Auslaß 13 hin freigibt.

Beim Darstellungsbeispiel ist der Handhebel 8 um eine vorzugsweise am Gehäuse 11 der Ventileinrichtung 1 gelagerte bzw. davon gebildete Drehachse 19 schwenkbar. Jedoch sind auch andere konstruktive Lösungen möglich.

Der Handhebel 8 greift vorzugsweise unmittelbar an dem Stellelement 17 an, insbesondere an dem aus dem Gehäuse 11 vorragenden Teil bzw. freien Ende des Stellelements 17. Jedoch kann grundsätzlich auch eine aus dem Stand der Technik bereits bekannte oder sonstige Untersetzung eingesetzt werden, um zusätzlich zu der nachfolgend noch im einzelnen zu beschreibenden hydraulischen Verringerung der Öffnungskraft eine mechanische Verringerung der Öf&mngskraft durch Vergrößerung des Betätigungsweges des Handhebels 8 zumindest beim anfänglichen Öffnen zu erreichen.

Vorzugsweise greift der Handhebel 8 über ein die Reibung minimierendes Zwischenlagdement 20 am Stellelement 17 und/oder zumindest im wesentlichen axial am freien Ende des Stellelements 17 an.

Die Öffnungseinrichtung 7 bzw. das Stellelement 17 greift vorzugsweise abströmseitig bzw. auslaßseitig am Ventilkörper 14 an.

Bei Betätigung des Handhebels 8 (Schwenken in Uhrzeigerrichtung bei der Darstellung gemäß Figur 2) wird das Stellelement 17 axial verschoben und gegen den Ventilkörper 14 gedrückt, so daß der Ventilkörper 14 vom Ventilsitz 15 gegen die Kraft der Feder 16 abgehoben wird und dadurch das Absperrventil 6 öffnet. Bei Loslassen des Handhebels 8 bewirkt die Feder 16 wieder ein Schließen des Absperrventils 6, also ein Zurückbewegen des Ventilkörpers 14 gegen den Ventilsitz 15 und eine axiale Rückstellung des Stellelements 17.

Die Öffnungseinrichtung 7 weist vorschlagsgemäß einen Kolben 21 auf, der mit der Flüssigkeit 2 beaufschlagbar ist, um in Öffnungsrichtung des Absperrventils 6 zu wirken. Der Kolben 21 ist vorzugsweise am Stellelement 17 angeordnet, insbesondere einstückig mit diesem ausgebildet bzw. von diesem gebildet.

Der Kolben 21 ist vorzugsweise abgedichtet über eine Dichtung 22 in einem Kolbenraum 23 verschiebbar geführt, beim Darstellungsbeispiel zusammen bzw. in Abhängigkeit von dem Stellelement 17 verschiebbar. Der Kolben 21 bzw. Kolbenraum 23 ist vorzugsweise zwischen einem abströmseitigen Abflußraum 24 des Absperrventils 6 bzw. Auslaßes 12 und der Herausführung des Stellelements 17 aus dem Gehäuse 11 bzw. der Dichtung 18 angeordnet.

Der Kolben 21 bzw. dessen Dichtung 22 und der zugeordnete Kolbenraum 23 stellen vorzugsweise eine längsverschiebliche Führung des Stellelements 17 dar. Besonders bevorzugt ist das Stellelement 17 nur in diesem Bereich und im Bereich der Rausführung aus dem Gehäuse 11, insbesondere im Bereich der Dichtung 18, verschieblich geführt. Dies gestattet einen einfachen und damit auch kostengünstigen Aufbau.

Beim Darstellungsbeispiel ist das Stellelement 17 vorzugsweise nicht fest mit dem Ventilkörper 14 verbunden, sondern liegt oder schlägt an diesen nur an.

Der Kolben 21 ist mit der Flüssigkeit 2 beaufschlagbar, so daß der Kolben 21 in Öffnungsrichtung des Abstellventils 6 wirkt. Beim Darstellungsbeispiel ist der Kolben 21 abströmseitig bzw. auslaßseitig vom Ventilkörper 6 angeordnet und/oder auf der dem Ventilkörper 14 bzw. Absperrventil 6 abgewandten Seite durch die Flüssigkeit 2 beaufschlagbar.

Der Kolbenraum 23 ist vorschlagsgemäß über einen Steuerkanal 25 an den Einlaß 12 angeschlossen. Der Steuerkanal 25 zweigt also stromauf des Absperrventils 6 ab und leitet die Flüssigkeit 2 in den Kolbenraum 23, so daß der Flüssigkeitsdruck in Öffnungsrichtung des Absperrventils 6 wirkt.

Der Steuerkanal 25 ist beim Darstellungsbeispiel vorzugsweise durch zwei oder mehr Bohrungen gebildet, insbesondere durch eine zumindest im wesentlichen parallel zur Bewegungs- oder Längssachse des Stellelements 17 bzw. zur Öffnungsrichtung des Absperrventils 6 verlaufende Bohrung und durch eine quer dazu verlaufende Bohrung. Beide Bohrungen sind jeweils vorzugsweise durch entsprechende Stopfen gehäuseseitig verschlossen und kreuzen einander. Jedoch sind auch andere konstruktive Lösungen möglich, um die gewünschte fluidische Verbindung herzustellen.

Da der Steuerkanal 25 stromauf des Absperrventils 6 abzweigt, also mit dem einlaßseitigen Flüssigkeitsdruck in Verbindung steht, wirkt der Flüssigkeitsdruck auch bei geschlossenem Absperrventil 6 und führt daher im Gegensatz zum Stand der Technik zu einer hydraulischen Verringerung der anfänglich erforderlichen Kraft zum Öffnen des Absperrventils 6. Dementsprechend ist also weniger Kraft aufzuwenden, wenn das Absperrventil 6 durch Betätigen des Handhebels 8 geöffnet wird.

Vorzugsweise beträgt die effektive Fläche des Kolbens 21 (die tatsächlich für die in Öffnungsrichtung wirkende Kraft relevante Fläche; beim Darstellungsbeispiel die Gesamtfläche des Kolbens 21 abzüglich der Fläche des aus dem Gehäuse 11 austretenden Stellelements 17) mindestens 5 % weniger, insbesondere im wesentlichen 10 bis 20 % weniger als die effektive Fläche des Ventilsitzes 15 (die effektiv in Schließrichtung wirkende Fläche und damit eine in Schließrichtung wirkende Kraft erzeugende Fläche des Ventilkörpers 14 bei geschlossenem Absperrventil 6). So wird eine sehr gute Öffnungskxaeerringerung erreicht, wobei die Vorspannkraft der Feder 16 ein immer noch sicheres Schließen des Absperrventils 6 - beispielsweise auch bei Druckschwankungen - sicher stellt.

Besonders bevorzugt weist die vorschlagsgemäße Ventilanordnung 1 ein Mittel zur Verlangsamung des Schließens des Absperrventils 6 nach dem Entlasten bzw. Loslassen des Handhebels 8 auf. Dieses Mittel wird vorzugsweise durch eine dem Steuerkanal 25 zugeordnete Drossel 26 gebildet. Diese sorgt dafür, daß die Flüssigkeit 2 aus dem Kolbenraum 23 nur verhältnismäßig langsam über die Drossel 26 abfließen kann, so daß auch bei relativ hoher Vorspann- oder Schließkraft der Feder 16 der Ventilelkörper 14 nur entsprechend langsam schließen kann. Dementsprechend wird so ein unerwünschtes starkes Aufprallen des Ventilkörpers 14 auf den Ventilsitz 15 vermieden.

## Patentansprüche

1. Ventilanordnung (1) zum Absperren und Freigeben von vorzugsweise unter hohem Druck stehender Flüssigkeit (2), insbesondere für eine Hochdruckleitung, Ventilpistole (3) oder Hochdruckreinigungsvorrichtung (4),
mit einem Absperrventil (6), das einen Ventilkörper (14) und einen zugeordneten Ventilsitz (15) aufweist, insbesondere wobei der Ventilkörper (14) vom Flüssigkeitsdruck in Schließstellung gegen den Ventilsitz (15) vorspannbar ist, und
mit einer Öffnungseinrichtung (7) zum Öffnen des Absperrventils (6) durch Abheben des Ventilkörpers (14) vom Ventilsitz (15), wobei die Öffnungseinrichtung (7) einen über einen Steuerkanal (25) mit der Flüssigkeit (2) beaufschlagbaren Kolben (21) aufweist, der in Öffnungsrichtung des Absperrventils (6) wirkt,
**dadurch gekennzeichnet,**
**daß** der Steuerkanal (25) stromauf des Absperrventils (6) zur einlaßseitigen Abzweigung der Flüssigkeit (2) angeschlossen ist, um den Kolben (21) in Öffnungsrichtung des Ventilkörpers (14) vorzuspannen und/oder die Kraft zum öffnen des Absperrventils (6) zu verringern, und/oder
**daß** die Ventilanordnung (1) ein Mittel zur Verlangsamung bzw. Dämpfung des Schließens des Absperrventils (6) aufweist.

2. Ventilanordnung nach Anspruch 1, **dadurch gekennzeichnet, daß** das Absperrventil (6) eine den Ventilkörper (14) in die Schließstellung vorspannende Feder (16) aufweist.

3. Ventilanordnung nach Anspruch 1 oder 2, **dadurch gekennzeichnet, daß** die Öffnungseinrichtung (7) einen Handhebel (8) zum manuellen Öffnen des Absperrventils (6) aufweist.

4. Ventilanordnung nach einem der voranstehenden Ansprüche, **dadurch gekennzeichnet, daß** die Öffnungseinrichtung (7) insbesondere mittels eines vorzugsweise längsverschiebbaren Stellelements (17) direkt auf den Ventilkörper (14) wirkt.

5. Ventilanordnung nach den Ansprüchen 3 und 4, **dadurch gekennzeichnet, daß** der Handhebel (8) direkt oder über eine ggf. variable Untersetzung auf das Stellelement (17) wirkt.

6. Ventilanordnung nach Anspruch 4 oder 5, **dadurch gekennzeichnet, daß** der Kolben (21) vom Stellelement (17) gebildet ist.

7. Ventilanordnung nach einem der voranstehenden Ansprüche, **dadurch gekennzeichnet, daß** die effektive Fläche des Kolbens (21) um mindestens 5 %, vorzugsweise im wesentlichen 10 bis 20 % oder mehr, kleiner als die effektive Fläche des Ventilsitzes (15) ist.

8. Ventilanordnung nach einem der voranstehenden Ansprüche, **dadurch gekennzeichnet, daß** dem Steuerkanal (25) eine Drossel (26) als Mittel zur Verlangsamung bzw. Dämpfung des Schließens des Absperrventils (6) zugeordnet oder von diesem gebildet ist.

9. Ventilpistole (3) für eine Hochdruckreinigungsvorrichtung (4), **gekennzeichnet durch** eine Ventilanordnung (1) gemäß einem der voranstehenden Ansprüche.

10. Hochdruckreinigungsvorrichtung (4) mit einer Hochdruckleitung, **gekennzeichnet durch** eine der Hochdruckleitung zugeordnete Ventilanordnung (1) gemäß einem der Ansprüche 1 bis 8.

11. Hochdruekreinigungsvonriclatung (4) nach Anspruch 10, **dadurch gekennzeichnet, daß** die Ventilanordnung (1) in einer Ventilpistole (3) der Hochdruckreinigungsvorrichtung (4) angeordnet ist.
